# EUROPÄISCHE PATENTANMELDUNG

(11) **EP 1 213 537 A1**
(43) Veröffentlichungstag der Anmeldung: **12.06.2002**
(21) Anmeldenummer: 01128203.5
(22) Anmeldetag: 28.11.2001
(51) Int. Cl.: F23G 1/00

(54) **Verfahren zur gefahrlosen Verwertung von Rückständen der Tierkörperbeseitigung**

(30) Priorität: 07.12.2000 DE 10061133
(71) Anmelder: Baier, Hubert, Dr., D-48143 Münster (DE); Heimsoth, Werner, 45721 Haltern (DE)
(72) Erfinder: Baier, Hubert, Dr., D-48143 Münster (DE); Heimsoth, Werner, 45721 Haltern (DE)
(74) Vertreter: Werner, Hans-Karsten, Dr.Dipl.-Chem.

(57) **Zusammenfassung**

Das Verfahren zur gefahrlosen Verwertung von Rückständen der Tierkörperbeseitigung, insbesondere von Tiermehl, Fleischbrei oder Fleischfett, besteht darin, dass dem Material Branntkalk, Freikalk enthaltene Rückstände oder hydraulisch aktive Substanzen zugemischt werden, gewünschtenfalls anschließend das Fett abgepresst und getrennt weiterverarbeitet wird, das eiweißhaltige feste Material mit einem mineralischen Bindemittel vermischt, zu einem stückigen Material verarbeitet wird mit gezielt eingestellten Eigenschaften bezüglich Stückgröße, Heizwert, Festigkeit und Restfeuchtigkeit und dieses stückige Material einer Verbrennungsanlage oder einer thermischen Behandlungsanlage zugeführt wird. Vor dem Abpressen des Fettes kann gewünschtenfalls beispielsweise mit Zitronensäure neutralisiert werden.

## Beschreibung

Gegenstand der Beschreibung der vorliegenden Erfindung ist ein Verfahren zur gefahrlosen Verwertung von Rückständen der Tierkörperbeseitigung, insbesondere von Tiermehl, Fleischbrei oder Fleischfett.

Ausgelöst durch das Verfütterungsverbot ist das Problem entstanden, vorhandenen Vorräte an Tiermehl und in Zukunft des Fleischbreis und Fleischfett gefahrlos zu entsorgen und vorzugsweise zu verwerten. Dabei sind zu beachten die Anforderungen an den Umweltschutz sowie an den Schutz des Personals, welches mit den Rückständen der Tierkörperbeseitigung in Berührung kommen könnte. Schließlich muss dafür gesorgt werden, dass weder das Tiermehl noch der Fleischbrei oder Fleischfett illegal erneut in Vertriebswege gebracht werden kann, bei denen es doch wieder in Tierfutter auftauchen könnte.

Diese Aufgabe wird erfindungsgemäss gelöst dadurch, dass dem Material Branntkalk, Freikalk enthaltende Rückstände oder hydraulisch aktive Substanzen zugemischt werden, gewünschtenfalls anschließend das Fett abgepresst und getrennt weiterverarbeitet wird, das eiweißhaltige feste Material mit einem mineralischen Bindemittel vermischt, zu einem stückigen Material verarbeitet wird mit gezielt eingestellten Eigenschaften bezüglich Stückgröße, Heizwert, Festigkeit und Restfeuchtigkeit und dieses stückige Material einer Verbrennungsanlage oder einer thermischen Behandlungsanlage zugeführt wird.

Branntkalk oder Freikalk enthaltene Rückstände, beispielsweise aus Verbrennungsanlagen sind in der Lage sowohl Tiermehl als auch Fleischbrei oder Fleischfett so zu verändern, dass ihrer weiteren Verwertung und Verarbeitung, insbesondere in Verbrennungsanlagen oder thermischen Behandlungsanlagen nichts mehr entgegen steht. Branntkalk oder Freikalk enthaltene Rückstände führen zu einer so starken Veränderung, dass weder so behandeltes Tiermehl noch so behandelter Fleischbrei zu Futterzwecken eingesetzt werden können. Weiterhin führen sie zu einer Zerstörung der Eiweißkomponenten, so dass eine Infektionsgefahr, beispielsweise des Personals in den Anlagen, beseitigt wird. Der Branntkalk oder die Freikalk enthaltenen Rückstände dienen anschließend als Reaktionspartner bei der Verfestigung zum stückigen Material mit anderen Komponenten des Bindemittels. Anstelle von Branntkalk oder Freikalk enthaltenen Rückstände können auch hydraulische Bindemittel zugesetzt werden. Weiterhin kann sowohl das Ausgangsmaterial als auch das eiweißhaltige Endprodukt so vergällt werden, dass eine ursprünglich vorgesehene Verwendung als Futtermittel unmöglich ist.

Gewünschtenfalls kann das mit Branntkalk, Freikalk enthaltenden Rückständen oder hydraulisch aktiven Substanzen behandelte Material abgepresst werden, um das in ihm vorhandene Fett zu gewinnen. Vorzugsweise wird dazu das Material vor dem Abpressen neutralisiert. Geeignet hierfür ist beispielsweise Zitronensäure. Das so gewonnene Fett kann, je nach Ausgangsmaterial und verwendetem Kalkmaterial, zu mehr oder weniger hochwertigen Wertstoffen oder Rohstoffen verarbeitet werden. Gleichzeitig wird durch die Entfernung des Fettes und das mineralische Bindemittel der Brennwert von Tiermehl oder Fleischbrei so eingestellt, dass die Verbrennung des stückigen Materials, beispielsweise in Müllverbrennungsanlagen problemlos erfolgen kann.

Auf alle Fälle wird das eiweißhaltige feste Material mit einem mehr oder weniger hohem Fettgehalt mit dem Komponenten des mineralischen Bindemittelsystems vermischt und zu einem stückigen Material verarbeitet. Als mineralische Bindemittel kommen beispielsweise in Frage die hydraulischen Bindemittel wie Zement, Flugaschen oder Hüttensande, wobei zu diesem Zweck auch andere hydraulisch reagierene Produkte oder Produktionschargen zum Einsatz kommen können. Es ist nur nötig, dass diese Bindemittel in der Lage sind, die Rückstände der Tierkörperbeseitigung so fest einzubinden, dass das stückige Material bis zur Verbrennung problemlos gelagert, befördert und in der Verbrennungsanlage oder thermischen Behandlungsanlage verbrannt werden kann. Die Eigenschaften des stückigen Materials werden somit gezielt eingestellt, insbesondere bezüglich Stückgröße, Heizwert, Festigkeit und Restfeuchtigkeit. So kann vermieden werden, dass bei Lagerung, Transport und Verbrennung Staub entsteht und/oder ein Teil des Materials in die Abgase oder Rostaschenanlagen gelangen kann.

Das Material kann in an sich bekannter Weise stückig gemacht werden beispielsweise durch Extruder, Pressen, Kompaktoren und ähnliche Vorrichtungen, wobei diese vor oder während des Abbindeprozesses zum Einsatz kommen sollen, um wiederum Staubbildung zu vermeiden. Die Vermischen mit den mineralischen Bindemitteln erfolgt vorzugsweise in Durchlaufzwangsmischern, wobei die Verweilmischzeit vorgegeben und geregelt werden kann.

Dieses stückige Material kann dann erfindungsgemäss einer Verbrennungsanlage oder einer thermischen Behandlungsanlage zugeführt werden. Als thermische Behandlungsanlagen kommen vorzugsweise Sonderund Müllverbrennungsanlagen in Frage. Es sind aber durchaus auch die Verbrennungsanlagen von Kohlen- und Braunkohlenkraftwerken geeignet. Als energetische/thermische Behandlungsanlagen kommen auch Zementdrehrohranlagen in Frage, bei denen die mineralischen Komponenten des stückigen Materials in den Zementklinker mit eingebunden werden können. Im Falle von abbindefähigen Calziumsulfaten kann es sich um Rückstände aus Rauchgasreinigungsanlagen handeln. Bei der Verbrennung in Müllverbrennungsanlagen entstehen Aschen und Schlacken die ungefährlich entsorgt oder wiederverwertet werden können.

Das erfindungsgemäße Verfahren ist somit in der Lage sämtliche Aufgaben zu einer gefahrlosen Lagerung und Verwertung von Rückständen der Tierkörperbeseitigung zu lösen. Das Verfahren lässt sich preiswert und einfach durchführen und ist somit ökonomisch und ökologisch von besonderer Bedeutung.

## Patentansprüche

1. Verfahren zur gefahrlosen Verwertung von Rückständen der Tierkörperbeseitigung, insbesondere von Tiermehl, Fleischbrei oder Fleischfett, **dadurch gekennzeichnet, dass** dem Material Branntkalk, Freikalk enthaltene Rückstände oder hydraulisch aktive Substanzen zugemischt werden, gewünschtenfalls anschließend das Fett abgepresst und getrennt weiterverarbeitet wird, das eiweißhaltige feste Material mit einem mineralischen Bindemittel vermischt, zu einem stückigen Material verarbeitet wird mit gezielt eingestellten Eigenschaften bezüglich Stückgröße, Heizwert, Festigkeit und Restfeuchtigkeit und dieses stückige Material einer Verbrennungsanlage oder einer thermischen Behandlungsanlage zugeführt wird.

2. Verfahren gemäss Anspruch 1, **dadurch gekennzeichnet, dass** das Ausgangsmaterial und/oder die eiweißhaltigen Endprodukte vergällt werden.

3. Verfahren gemäss Anspruch 1 oder 2, **dadurch gekennzeichnet, dass** das Material vor dem Abpressen des Fettes neutralisiert wird.
